# EUROPÄISCHE PATENTSCHRIFT

(11) **EP 4 229 380 B1**
(45) Veröffentlichungstag und Bekanntmachung des Hinweises auf die Patenterteilung: **17.12.2025**
(21) Anmeldenummer: 20803754.9
(22) Anmeldetag: 14.10.2020
(51) Int. Cl.: G01L 9/00, G01L 21/12, G01L 21/34, G01L 27/00, G01L 15/00

(54) **BETRIEBSVERFAHREN FUER GRUPPE VON DRUCKSENSOREN**
OPERATING METHOD FOR A GROUP OF PRESSURE SENSORS
PROCÉDÉ DE FONCTIONNEMENT D'UN GROUPE DE CAPTEURS DE PRESSION

(43) Veröffentlichungstag der Anmeldung: 23.08.2023
(73) Patentinhaber: Inficon AG, 9496 Balzers (LI)
(72) Erfinder: BERG, Christian, 8712 Stäfa (CH); ENDERES, Rolf, 9479 Malans (CH); WÜEST, Martin, 7208 Malans (CH); ANDREAUS, Bernhard, 8640 Rapperswil (CH)
(74) Vertreter: Troesch Scheidegger Werner AG
(86) Internationale Anmeldenummer: PCT/EP2020/078924
(87) Internationale Veröffentlichungsnummer: WO 2022/078593

(56) Entgegenhaltungen:
- EP-A2- 0 379 841
- DE-A1- 102005 029 114
- DE-A1- 19 860 500
- US-A1- 2020 103 323

## Beschreibung

Die vorliegende Erfindung betrifft ein Verfahren zum Betrieb einer Gruppe von Drucksensoren gemäß dem beigefügten Anspruch 1, eine Vorrichtung zur Durchführung des Verfahrens gemäß dem beigefügten Anspruch 15, und ein Computer-Programm-Produkt gemäß dem beigefügten Anspruch 18.

Im Stand der Technik sind verschiedene Typen von Drucksensoren bekannt. Dazu gehören Drucksensoren, deren Messprinzip auf der Deformation einer Membran durch eine Druckdifferenz zwischen den beiden Seiten der Membran beruht, wie z.B. sogenannte Kapazitätsmembran-Manometer (englisch: capacitance diaphragm gauge, abgekürzt: CDG). Sogenannte Wärmeleitungsvakuummeter bestimmen den Druck über die vom Druck abhängige Wärmeleitung eines Gases, beispielsweise im Fall eines Pirani-Vakuummeters resp. eines Pirani-Sensors über die Bestimmung der Wärmeleistung welche von einem stromdurchflossenen Draht an das umgebende Gas abgegeben wird. Ionisationsmanometer, ein anderer Typ von Drucksensoren, messen indirekt den Druck mittels der gasartabhängigen Bestimmung der Gasdichte. Durch Ionisation der Gasmoleküle mittels Elektronen wird die Gasdichte anhand der Neutralisierungsrate der Ionen auf einer Kollektorelektrode, wobei die Neutralisierungsrate mittels einer Strommessung ermittelt wird, bestimmt.

Unterschiedliche Typen von Drucksensoren haben unterschiedliche Messbereiche. So gibt es beispielsweise Drucksensoren, welche bei Atmosphärendruck sinnvolle Messwerte liefern, die aber bei sehr kleinen Drücken, beispielsweise im Feinvakuum oder Hochvakuum, keine Unterschiede mehr feststellen können. Andere Drucksensoren setzen einen Druck im Millibar (mbar) Bereich voraus, um überhaupt betrieben werden zu können, und können sehr niedrige Drücke auflösen. Im Stand der Technik ist es bekannt, eine Gruppe von Drucksensoren, beispielsweise bestehend aus zwei Drucksensoren mit überlappendem Messbereich, dazu einzusetzen, um einen grösseren Druck-Messbereich abzudecken, als dies ein einzelner Drucksensor-Typ kann. Beispielsweise kombiniert die PCG550 Produktfamilie der INFICON AG einen Pirani-Sensor und ein keramisches Kapazitätsmembran-Manometer in einer Messvorrichtung, wobei die Messbereiche des Pirani-Sensors und des keramischen Kapazitätsmembran-Manometers überlappen.

DE 198 60 500 A1 betrifft eine Vorrichtung zur Druckmessung umfassend einen ersten Drucksensor zum Erfassen eines Drucks in einem ersten Druckbereich, einen zweiten Drucksensor zum Erfassen eines Drucks in einem zweiten Druckbereich, wobei sich der erste und der zweite Druckbereich überlappen, und eine Kalibriereinrichtung zum Kalibrieren des zweiten Drucksensors mittels des ersten Drucksensors durch Korrigieren der Ausgabe des zweiten Drucksensors basierend auf den Ausgaben des ersten und des zweiten Drucksensors innerhalb des Überlappungsbereichs des ersten und des zweiten Druckbereichs, derart, dass die kalibrierte Ausgabe des zweiten Drucksensors in dem Überlappungsbereich im Wesentlichen gleich der Ausgabe des ersten Drucksensors ist. Damit wird auf einfache und gleichzeitig genaue Art und Weise eine Kalibrierung des zweiten Drucksensors erreicht, was besonders vorteilhaft ist, wenn Druckmessungen im Vakuumbereich durchgeführt werden müssen, bei denen der erste Drucksensor ein Absolutdrucksensor ist, und der zweite Drucksensor z.B. ein Wärmeleitungs-Drucksensor oder ein Ionisations-Drucksensor etc. ist, der von der Gasart abhängig ist.

DE 10 2005 029 114 A1 betrifft das Messen von Druck in einem grossen Bereich, insbesondere von Absolutdruck im Bereich von atmosphärischem Druck bis in den Ultrahochvakuum-Bereich hinein. Da kein Messprinzip bekannt ist, das alleine den gesamten Bereich abdeckt, werden meist unterschiedliche Prinzipien aneinandergereiht. Zur Einsparung von Kosten und zur Verringerung des Platzbedarfs wurden Sensor-Anordnungen entwickelt, die mehrere Messprinzipien vereinigen. Für diese Kombinations-DruckSensoren sind Methoden der Wertangleichung im Bereich der Überlappung von zwei unterschiedlichen Sensoren notwendig, um auch in diesem Übergangsbereich ein eindeutiges "Ausgabe-Signal" zu erzielen. Es wird ein Verfahren beschrieben, bei dem durch Beobachtung der Signale der beteiligten Sensoren auch ausserhalb des Überlappungsbereiches automatisch ein günstiger "Wertangleichungsbereich" ermittelt und damit der Fehler im Ausgabe-Signal verringert wird. Ein weiteres Verfahren, das die gleiche Beobachtungs-Methode nutzt, hat zum Ziel, einen der Drucksensoren automatisch nachzujustieren in einem Zustand, in dem sein "Sensor-Signal" nicht in das "Ausgabe-Signal" einbezogen ist. Weiter werden Anordnungen von Drucksensoren beschrieben, die sich für diese Verfahren eignen.

US 2020/0103323 A1 betrifft ein System zur vergleichenden Druckmessung umfassend eine Messkammer, die mit einem Gasgemisch gefüllt ist, das einen Gasdruck aufweist. In der Messkammer ist ein erster Sensor angeordnet. Der erste Sensor ist dazu ausgelegt, den Gasdruck unabhängig von der Art des Gasgemisches zu messen. In der Messkammer ist ein zweiter Sensor angeordnet. Der zweite Sensor ist dazu ausgelegt, den Gasdruck basierend auf einer bekannten Abhängigkeit von einer Art des Gasgemisches zu messen. Eine Auswerteeinheit ermittelt einen Zustand des Gasgemisches anhand der vom ersten Drucksensor und vom zweiten Drucksensor gleichzeitig gemessenen Gasdruckwerte.

EP 0 379 841 A2 stellt ein Verfahren zum Messen von Druck, vorzugsweise Vakuum, vor. Die Mess-Signale aus einem Wärmeleitungsmanometer und Mess-Signale aus einem Gasreibungsmanometer werden beispielsweise linear überlagert oder addiert oder durch Multiplikation zu einem gemeinsamen Mess-Signal verarbeitet. Vorzugsweise wird als Wärmeleitungsmanometer ein Piranimanometer und als Gasreibungsmanometer ein Stimmgabelquarzmanometer verwendet.

Aus der Veröffentlichungsschrift EP 0 658 755 A1 ist ein Verfahren zum Auswerten der Ausgangssignal zweier Drucksensoren bekannt. Es wird in dieser Veröffentlichungsschrift, insbesondere für die Kombination von Kaltkathoden-Ionisationssensoren und Pirani-Sensoren, zum Erhalt eines verglichen mit den Messbereichen der jeweiligen Sensortypen wesentlich erweiterten, eindeutigen Messbereiches, eine Gewichtungstechnik im Übergangsbereich der jeweiligen Sensormessbereiche vorgeschlagen, mittels welcher die Sensorkennlinien in ein-eindeutiger Weise stetig ineinander übergeführt werden.

Die Aufgabe der vorliegenden Erfindung bestand darin, ein alternatives Betriebsverfahren zur Verfügung zu stellen. Insbesondere bestand die Aufgabe darin, ein Betriebsverfahren zur Verfügung zu stellen, welches die Genauigkeit der Druckmessung über den gesamten Druckmessbereich erhöht.

Diese Aufgabe wird durch das Verfahren nach Anspruch 1 gelöst. Es handelt sich beim erfindungsgemässen Verfahren um ein Verfahren zum Betrieb einer Gruppe von Drucksensoren. Die Gruppe von Drucksensoren umfasst mindestens einen ersten Drucksensor mit einem ersten Druck-Messbereich und mindestens einen zweiten Drucksensor mit einem zweiten Druck-Messbereich. Der erste und der zweite Drucksensor sind so angeordnet, dass sie den Druck in einem gemeinsamen Messvolumen messen können. Der erste und der zweite Druck-Messbereich überlappen in einem Überlapp-Druck-Messbereich. Das Verfahren umfasst die Schritte:
aa) im Wesentlichen gleichzeitiges Auslesen eines ersten Mess-Signals des ersten Drucksensors und eines zweiten Mess-Signals des zweiten Drucksensors während der Druck im gemeinsamen Messvolumen im Überlapp-Druck-Messbereich liegt;
bb) Festlegen des ausgelesenen ersten Mess-Signals als Justierpunkt für den zweiten Drucksensor;
cc) Bestimmen mindestens eines gasabhängigen Kalibrierungsparameters für den zweiten Drucksensor in Funktion des ersten Mess-Signals, in Funktion des in Schritt bb) festgelegten Justierpunkts und in Funktion des zweiten Mess-Signals, wobei ein aktueller Druck-Messwert im Messvolumen in Funktion eines aktuellen zweiten Mess-Signals und des vorher bestimmten mindestens einen Kalibrierungsparameters oder der vorher bestimmten Kalibrierungsparameter ermittelt wird, und das Verfahren weiter den Schritt umfasst:
   gg) Entscheiden, ob eine im gemeinsamen Messvolumen vorhandene Gaszusammensetzung von einer Soll-Vorgabe abweicht, wobei eine Abweichung vom aktuellen Druck-Messwert gegenüber einem aus dem ersten Mess-Signal abgeleiteten Druck-Messwert berücksichtigt wird, wobei das Auslesen des ersten Mess-Signals im Wesentlich gleichzeitig mit dem Auslesen des aktuellen zweiten Mess-Signals und während der Druck im gemeinsamen Messvolumen im Überlapp-Druck-Messbereich liegt erfolgt.

Die Erfinder haben erkannt, dass durch dieses Verfahren eine akkurate Bestimmung des Drucks möglich ist. Insbesondere kann auf überraschend einfache Weise eine weitgehende Unabhängigkeit des abgelesenen Drucks von der Gasart resp. von der Gaszusammensetzung erreicht werden, wenn zumindest einer der Drucksensoren ein Drucksensor eines Typs ist, der ein von der Gaszusammensetzung unabhängiges Mess-Signal liefert.

Einer oder mehrere der Drucksensoren in der Gruppe von Drucksensoren kann ein Vakuumdrucksensor sein, d.h. ein Drucksensor, welcher beispielsweise zur Messung des Drucks im Grobvakuum (d.h. im Druckbereich von ca. 1 mbar bis 1013 mbar, **d.h.** bis Atmosphärendruck), im Feinvakuum **(d.h. im** Druckbereich von 10⁻³ mbar bis 1 mbar), im Hochvakuum **(d.h.** im Druckbereich von 10⁻⁸ mbar bis 10⁻³ mbar) oder einer Kombination von zwei oder drei der genannten Vakuumdruckbereiche ausgelegt ist. Das Prinzip der vorliegenden Erfindung funktioniert auch für Drucksensoren zur Messung von Drücken nahe an Atmosphärendruck oder für Überdrucksensoren.

Der mindestens eine Kalibrierungsparameter kann insbesondere ein gasartabhängiger Kalibrierungsparameter sein.

Der Schritt aa) wird mindestens einmal durchgeführt. Der Schritt aa) kann auch mehrmals durchgeführt werden, insbesondere bei verschiedenen Drücken, um Messdaten zu erheben, auf deren Basis eine Mehrzahl von Kalibrierungsparametern im Schritt cc) angepasst werden können. Beispielsweise kann basierend auf zwei Messungen gemäss Schritt aa), die bei verschiedenen Drücken durchgeführt werden, ein Offset und eine Steigung bestimmt werden. Dies ist beispielsweise für die Gasart Wasserdampf vorteilhaft, bei welcher die Steigung im Pirani-Bereich von der normalen Steigung abweicht, sodass die Kurve "angezeigter Druck" versus "effektiver Druck" allein durch einen Offset oder einen Faktor nicht ausreichend genau beschrieben wäre.

Als konkretes Beispiel kann die Gruppe von Drucksensoren als ersten Drucksensor ein 13 mm CDG und als zweiten Drucksensor einen Pirani-Sensor umfassen. Der Justierpunkt kann in diesem Fall im 100 mTorr Druckbereich gewählt werden, d.h. ca. eine Dekade über dem unteren Rand des Messbereichs des für 10 Torr Vollausschlag ausgelegten ersten Drucksensors. Der gasartabhängige Kalibrierungsparameter des zweiten Drucksensors kann in diesem Beispiel der Faktor sein, um den das Mess-Signal des Pirani-Sensors beim zu kalibrierenden Gas und beim durch den Justierpunkt definierten Druck von dem Mess-Signal abweicht, welches mit Stickstoff beim Druck gemäss Justierpunkt erhalten wird.

Der Schritt cc) kann insbesondere mit einer bekannten Gasart im Messvolumen durchgeführt werden oder nacheinander mit einer Mehrzahl von untereinander in Gasart (beispielsweise Luft, Stickstoff, Sauerstoff, Wasserstoff, Helium, Argon, etc.) oder Konzentrationsverhältnissen (beispielsweise 20% Helium, 80% Stickstoff) verschiedener Gase im Messvolumen durchgeführt werden.

Kalibrierungsparameter können dann beispielweise in Tabellenform für verschiedene Gasarten abgespeichert werden. Auf diese Weise kann aus der Kombination des zweiten Mess-Signals mit einer Information über die im Messvolumen vorhandene Gasart mit erhöhter Präzision bestimmt werden. Die Information über die im Messvolumen vorhandene Gasart kann z.B. durch eine Steuereinheit zur Verfügung gestellte werden, welche einen Prozess in einer Vakuumkammer steuert. Die Information kann beispielsweise darin bestehen, dass ein Einlassventil für ein Schutzgas, beispielsweise Helium oder Argon, geöffnet wurde.

Ein möglicher Kalibrierungsparameter, der im Schritt cc) angepasst werden kann, ist ein Faktor, um den der Druck für die gewählte Gasart von einem Druck abweicht, welcher bei gleichem Mess-Signal dem Druck eines Referenzgases, beispielsweise Stickstoff, entsprechen würde.

Dadurch kann einerseits beispielsweise das gasartabhängige Druckmesssignal des zweiten Drucksensors durch diesen Faktor adjustiert werden so dass die Druckmessung auch im Bereich, wo nur der zweite Drucksensor misst, die Druckmessung entsprechend korrigiert und die Gasartabhängigkeit minimiert ist. Andererseits ergeben sich durch den Faktor Hinweise auf die Gaszusammensetzung bezgl. des Referenzgases.

Kompakte Kapazitätsmembran-Manometer mit kleiner Baugrösse sind beispielsweise als Produkt von INFICON unter der Bezeichnung "Porter^{™} CDG020D" erhältlich, sie erreichen den Vollausschlag ihrer Druckanzeige bei ca. 10 ... 1000 Torr und können Drücke bis hinunter zu 10 mTorr messen (bei Vollausschlag 10 Torr). Das erfindungsgemässe Verfahren eignet sich für den Betrieb einer Kombination von zwei oder mehr der genannten Drucksensoren, welche in einem gemeinsamen Messvolumen messen können.

Beispielsweise deckt das BCG450-Dreifachmessgerät Triple-Gauge^{™} den Bereich von Atmosphärendruck bis Ultrahochvakuum durch drei Sensoren ab. Das INFICON BCG450 Kombinationsmessgerät (Triple-Gauge^{™}) vereinigt die Vorteile dreier verschiedenen Technologien in einem einzigen, kompakten und wirtschaftlichen Gerät zur Messung von Prozess- und Basisdruck im Bereich von 5×10⁻¹⁰ bis 1500 mbar (3,75×10⁻¹⁰ bis 1125 Torr). Das BCG450 wurde entwickelt um drei individuelle Sensoren ersetzen zu können (Hot Ion, Pirani und ein kleines CDG mit 11 mm Durchmesser). Dies reduziert die Kosten und verringert den Platzbedarf an der Anlage. Dieses Kombinationsgerät kann beispielsweise mit dem erfindungsgemässen Verfahren betrieben werden.

Das erfindungsgemässe Verfahren eignet sich aber auch für Vorrichtungen, bei denen verschiedene Drucksensoren an derselben Vakuumkammer angebracht sind und so eine Gruppe von Drucksensoren bilden, welche ein gemeinsames Messvolumen haben.

Ausführungsformen des Verfahrens ergeben sich aus den Merkmalen der abhängigen Ansprüche 2 bis 16.

In einer Variante des Verfahrens liegt der Justierpunkt für den zweiten Drucksensor Druckbereich 10⁻² mbar bis 10⁰ mbar, insbesondere im Druckbereich 0.1 bis 0.4 mbar.

Beispielsweise in einer Kombination von CDG und Pirani-Sensor kann ein Überlapp-Druckbereich der beiden Drucksensoren durch die Dimensionierung des CDG vorteilhafterweise in einen Druckbereich gelegt werden, in dem die Gasart-Abhängigkeit des Pirani-Sensors sich in einem doppelt-logarithmischen Diagramm durch lineare und im Wesentlichen parallel verschobenen Kurven für jede Gasart charakterisiert ist, **d.h.** dass der Bereich höherer Drücke, in dem nicht-lineare auseinanderlaufende Gasart-Charakteristiken auftreten, vermieden wird. Dies erhöht die Genauigkeit weiter. Diese Variante des Verfahrens ist insbesondere geeignet für den Betrieb einer Gruppe von Drucksensoren, welche durch die Kombination von zwei für unterschiedliche Druckmessbereiche dimensionierten CDG's und einem Pirani-Sensor gebildet ist, wobei ein erstes CDG mit einem niedrigeren Druckmessbereich für den Überlappbereich mit dem linearen Bereich des Pirani-Sensors sorgt und ein zweites CDG mit einem höheren Druckmessbereich den effektiven Messbereich der Gruppe von Drucksensoren zu hohen Drücken hin erweitert.

Eine Variante des Verfahrens, umfasst weiter die Schritte: dd) ein weiteres Mal im Wesentlichen gleichzeitiges Auslesen eines weiteren ersten Mess-Signals des ersten Drucksensors und eines weiteren zweiten Mess-Signals des zweiten Drucksensors während der Druck im gemeinsamen Messvolumen im Überlapp-Druck-Messbereich liegt und wobei der Druck im gemeinsamen Messvolumen verschieden ist vom Druck im Schritt aa), insbesondere wobei sich der Druck im gemeinsamen Messvolumen um einen Faktor zwei, um eine Dekade oder mehr vom Druck im Schritt aa) unterscheidet; ee) Festlegen des weiteren ausgelesenen ersten Mess-Signals als weiteren Justierpunkt für den zweiten Drucksensor; ff) Bestimmen eines weiteren Kalibrierungsparameters (K2), insbesondere eines weiteren gasabhängigen Kalibrierungsparameters, für den zweiten Drucksensor in Funktion des weiteren ersten Mess-Signals, in Funktion des in Schritt ee) festgelegten weiteren Justierpunkts für den zweiten Drucksensor und in Funktion des weiteren zweiten Mess-Signals.

Diese Variante lässt sich erweitern auf das Erheben von drei oder mehr Messpunkten und Bestimmen von weiteren Kalibrierungsparametern, wobei die Anzahl Kalibrierungsparameter maximal der Anzahl von Messpunkten entspricht. Es können insbesondere auch mehr Messpunkte aufgenommen werden als Kalibrierungsparameter bestimmt werden sollen. In diesem Fall kann mit einem Ausgleichs-Algorithmus ein Satz von Kalibrierungsparametern bestimmt werden, der optimal zu den Messpunkten passt. So sind die Kalibrierungsparameter weniger von Messrauschen abhängig.

Wie bereits erwähnt, wird ein aktueller Druck-Messwert im Messvolumen in Funktion eines aktuellen zweiten Mess-Signals und des vorher bestimmten mindestens einen Kalibrierungsparameters oder der vorher bestimmten Kalibrierungsparameter ermittelt.

Dies umfasst den eigentlichen Schritt des Bestimmens aktueller Druckwerte, wobei die vorgängige Kalibrierung des zweiten Drucksensors verwendet wird. Diese Kalibrierung beruht auf der im Überlapp-Druck-Messbereich gewonnenen Information und kann nun auf dem ganzen zweiten Messbereich angewendet werden.

Wie bereits erwähnt, umfasst das Verfahren weiter den Schritt:
gg) Entscheiden, ob eine im gemeinsamen Messvolumen vorhandene Gaszusammensetzung von einer Soll-Vorgabe abweicht, wobei eine Abweichung vom aktuellen Druck-Messwert gegenüber einem aus dem ersten Mess-Signal abgeleiteten Druck-Messwert berücksichtigt wird, wobei das Auslesen des ersten Mess-Signals im Wesentlichen gleichzeitig mit dem Auslesen des aktuellen zweiten Mess-Signals und während der Druck im gemeinsamen Messvolumen im Überlapp-Druck-Messbereich liegt, erfolgt.

Der Schritt gg) entspricht einem Überprüfungsschritt für die Gaszusammensetzung. Durch Vorgabe eines Toleranzbereichs für akzeptable Abweichungen von der Soll-Vorgabe kann eine ja/nein Entscheidung gefällt werden, z.B. darüber, ob ein nächster Prozess-Schritt ausgeführt werden soll. Die Erfinder haben erkannt, dass sich hier auf eine sehr einfache Weise eine Funktionalität erhalten werden kann, für die üblicherweise ein Restgas-Analysegerät benötigt würde.

Dies kann z.B. verwendet werden, um Gaskompositionsschwankungen bei PVD Prozessen zu detektieren.

In einer Variante des Verfahrens ist der in Schritt ff) bestimmte weitere Kalibrierungsparameter eine Steigung in einem doppelt-logarithmischen Funktionsdiagramm des zweiten Mess-Signals in Abhängigkeit des ersten Mess-Signals oder wird aus dem im Schritten cc) bestimmten Kalibrierungsparameter und dem im Schritt ff) bestimmten Kalibrierungsparameter eine Steigung in einem doppelt-logarithmischen Funktionsdiagramm des zweiten Mess-Signals in Abhängigkeit des ersten Mess-Signals berechnet. Das Verfahren umfasst weiter die Schritte:
hh) Bestimmen einer Abweichung dieser Steigung von einer für ein Referenzgas, beispielsweise das Gas Stickstoff, erwarteten Steigung;
ii) Vergleichen der in Schritt hh) bestimmten Abweichung mit einer vorgegebenen Toleranzschwelle für die Abweichung; jj) bei Überschreiten der Toleranzschwelle, Auslösen eines Alarms für das Vorhandensein von Wasserdampf im gemeinsamen Messvolumen.

Die Erfinder haben erkannt, dass die Tatsache, dass bei Wasserdampf die genannte Steigung von der Steigung abweicht, welche bei praktisch allen relevanten Restgasen beobachtet wird, sodass aufgrund dieser Eigenschaft die Anwesenheit von Wasserdampf detektiert werden kann. Diese Eigenschaft ist für Pirani-Sensoren deutlich ausgeprägt.

In einer Variante des Verfahrens ist der erste Drucksensor ein Drucksensor eines von einer Gaszusammensetzung im Messvolumen unabhängigen Drucksensor-Typs. Weiter ist der zweite Drucksensor ein Drucksensors eines von der Gaszusammensetzung im Messvolumen abhängigen Drucksensor-Typs,
insbesondere kann der zweite Drucksensor
   - ein Wärmeleitungs-Vakuummeter, insbesondere nach Pirani oder mit Thermocouple Sensor, oder
   - ein Ionisations-Vakuummeter mit Kaltkathode, insbesondere ein Ionisations-Vakuummeter nach Penning, oder ein nichtinvertiertes Magnetron oder ein invertiertes Magnetron, oder
   - ein Ionisations-Vakuummeter mit Glühkathode, insbesondere ein Ionisations-Vakuummeter nach Bayard-Alpert, ein Ionisations-Vakuummeter mit Extractor oder mit Triode, oder
   - ein Spinning-Rotor-Gauge-Sensor
sein.

Drucksensoren können zwei Klassen von Drucksensor-Typen eingeteilt werden, nämlich in Drucksensoren, welche direkt empfindlich sind auf eine Kraft pro Fläche, und Drucksensoren, welche eine indirekte Auswirkung des Drucks auf eine andere physikalische Grösse, wie **z.B.** die Wärmeleitfähigkeit des unter dem zu messenden Druck stehenden Gases, zur Bestimmung des Drucks verwenden. Letzterer Typ von Drucksensoren ist in der Regel abhängig von der Gasart. Die Erfinder haben erkannt, dass eine Gruppe von Drucksensoren umfassend einen ersten Drucksensor des ersten Typs und einen zweiten Drucksensor des zweiten Typs besonders vom erfindungsgemässen Betriebsverfahren profitiert.

Dabei kann je nach gewünschtem Messbereich, d.h. je nach Druckbereich, in welchem eine hohe Messgenauigkeit erreicht wird, eine Kombination von Drucksensoren gewählt werden. Wärmeleitungsvakuummeter nach Pirani haben einen Messbereich von ca. 100 ... 0,1 Pa, Ionisations-Vakuummeter mit Kaltkathode nach Penning haben einen Messbereich von ca. 10⁰ ... 10⁻⁹ Pa und Ionisations-Vakuummeter mit Glühkathode nach Bayard-Alpert haben einen Messbereich ca. 1 ... 10⁻⁸ Pa, respektive 10⁻¹ ... 10⁻¹⁰ Pa bei Extraktor Messsystemen, respektive 10³ ... 10⁻¹⁰ Pa bei Trioden. Wärmeleitungsvakuummeter nach Pirani können bis zu Atmosphärendruck 10⁵ Pa verwendet werden, allerdings unter stark reduzierter Genauigkeit.

In einer Variante des Verfahrens ist der erste Drucksensor ein Membran-Manometer, insbesondere ein Kapazitätsmembran-Manometer, insbesondere ein keramisches Kapazitätsmembran-Manometer, oder ein optisches Membran-Manometer.

Membran-Manometer reagieren direkt auf die Kraft pro Fläche und sind daher gasartunabhängig.

In einer Variante des Verfahrens ist der zweite Drucksensor ein Wärmeleitungs-Vakuummeter, insbesondere nach Pirani oder ein Thermocouple.

Wärmeleitungs-Vakuummeter haben eine deutliche Gasartabhängigkeit und profitieren daher von einer Kalibrierung gemäss dem erfindungsgemässen Verfahren.

In einer Variante des Verfahrens werden die Schritte aa), bb) und cc) in regelmässigen Zeitabständen, insbesondere einmal täglich oder einmal wöchentlich, wiederholt.

Die Zeitabstände können insbesondere an den zeitlichen Ablauf weiterer Prozessschritte angepasst sein. Je nach Kontext ist vorgängig auch die Ausführung des Schrittes a), nämlich ein Absenken des Drucks im gemeinsamen Messvolumen in den Niedrigdruckbereich sinnvoll, sodass jeweils die ganze Sequenz der Schritte aa), bb) und cc) in regelmässigen Zeitabständen wiederholt wird. Die Sequenz der Schritte aa), bb) und cc) kann auch prozessabhängig wiederholt werden, beispielsweise wenn in einer Vakuumprozessanlage starke Temperaturzyklen gefahren werden.

In einer Variante des Verfahrens ist das Verfahren ein Verfahren zum Betrieb einer Vakuumprozessanlage, welche die Gruppe von Drucksensoren umfasst. Die Schritte aa), bb) und cc) werden einmal pro Prozesszyklus der Vakuumprozessanlage wiederholt.

Ein solcher Prozesszyklus kann beispielsweise Belüften, Einführen von Substraten, Absenken des Drucks in den Hochvakuumbereich, Einströmen lassen eines Prozessgases, Absaugen des Prozessgases, Belüften und Entnahme von Substraten umfassen. Die Schritte aa) bis cc) des Verfahrens können jeweils im Zusammenhang mit dem Absenken des Drucks in den Hochvakuumbereich durchgeführt werden. Diese Variante kann beispielsweise mit einer automatischen Druckmessungs-Qualitätsüberprüfung verbunden werden, wobei mehrere Druckwerte in einem in Bezug auf die zeitliche Dauer eines Prozess-Schrittes kurzen zeitlichen Abstand bestimmt werden und wobei überprüft wird, ob diese Druckwerte in einem definierten Wertebereich liegen. Damit kann ausgeschlossen werden, dass eine Druckänderung zu schnell verläuft, um Daten guter Qualität zu erfassen.

Beispielsweise kann das Verfahren automatisch immer dann ausgelöst werden, wenn ein Aktivierungs-Druckbereich erreicht oder durchschritten wird. Beispielsweise kann Überlapp-Druck-Messbereich, wie oben erwähnt, der Aktivierungs-Druckbereich für die Bestimmung eines Kalibrierungsparameters eines Pirani-Sensors sein.

In einer Variante des Verfahrens umfasst der zweite Druck-Messbereich einen Niedrigdruckbereich, in welchem der Druck niedriger ist als eine untere Grenze des ersten Druck-Messbereichs. Das Verfahren umfasst die zusätzlichen Schritte:
kk) Überprüfen, ob der Niedrigdruckbereich erreicht ist anhand eines zweiten Mess-Signals des zweiten Drucksensors;
ll) Auslesen eines ersten Mess-Signals des ersten Drucksensors, während der Druck im gemeinsamen Messvolumen im Niedrigdruckbereich liegt; und
mm) Festlegen des ausgelesenen ersten Mess-Signals als Nullpunkt-Signal für den ersten Drucksensor.

So kann beispielsweise bei Kapazitätsmembran-Manometern bestimmt werden, welcher Wert eines Ausgangssignal einem Druck von Null (resp. einem Druck am unteren Ende des Messbereichs) entspricht. Dieser Wert driftet langsam und kann die Interpretation des Mess-Signals erschweren. Mit dieser Variante des Verfahrens kann dieser Nullpunkt bei Bedarf immer wieder neu bestimmt und aktualisiert werden, wobei sichergestellt ist, dass ein genügend niedriger Druck im gemeinsamen Messvolumen der beiden Drucksensoren herrscht, um den Nullpunkt festlegen zu können. Beispielsweise für die oben erwähnte PCG550 Produktfamilie kann der Pirani-Sensor als zweiter Drucksensor herangezogen werden, um den Nullpunkt des CDG, der in diesem Fall die Rolle des ersten Drucksensors hat, im erfindungsgemässen Verfahren festzulegen. Eine Kombination von Bestimmung eines Kalibrationsparameters und vorgängigem Nullen gemäss dieser Variante des Verfahrens erhöht die Genauigkeit der Druckmessung über den gesamten Druckmessbereich wesentlich.

Eine Variante des Verfahrens umfasst weiter die Schritte: nn) Erhöhen des Drucks im gemeinsamen Messvolumen in den ersten Druck-Messbereich;
oo) Auslesen eines aktuellen ersten Mess-Signals des ersten Drucksensors;
pp) Bestimmen eines aktuellen Druck-Messwertes als Funktion des aktuellen ersten Mess-Signals und des in Schritt mm) bestimmten Nullpunkt-Signals, insbesondere als Funktion einer Differenz des aktuellen ersten Mess-Signals und des Nullpunkt-Signals.

Der aktuelle Druck-Messwert ist auf diese Weise ein aktueller Druck-Messwert mit korrektem Nullpunkt.

In einer Variante des Verfahrens umfasst der Niedrigdruckbereich nur Drücke, welche um mindestens einen Faktor zehn, insbesondere mindestens um einen Faktor hundert, kleiner sind, als die untere Grenze des ersten Druck-Messbereichs.

Die Erfinder haben erkannt, dass mit dieser Variante der Nullpunkt für den ersten Sensor besonders genau bestimmt werden kann.

In einer Variante des Verfahrens umfasst der Niedrigdruckbereich den Bereich 10⁻³ mbar bis 10⁻⁴ mbar.

Diese Variante kann beispielsweise in Kombination mit der oben genannten Variante realisiert sein, bei welcher der zweite Drucksensor ein Wärmeleitungs-Vakuummeter nach Pirani ist. Keramische Kapazitäts-Manometer in der Rolle des ersten Drucksensors profitieren besonders von einer regelmässigen Bestimmung des Nullpunkts nach dieser Variante des Verfahrens.

In einer Variante des Verfahrens umfasst die Gruppe von Drucksensoren mindestens drei Drucksensoren. Die Schritte gemäss erfindungsgemässem Verfahren werden auf ein erstes Paar von Drucksensoren aus der Gruppe von Drucksensoren angewendet und die Schritte gemäss erfindungsgemässem Verfahren werden auch auf ein zweites Paar von Drucksensoren aus der Gruppe von Drucksensoren angewendet. Dabei ist einer der Drucksensoren des ersten Paars auch ein Drucksensor des zweiten Paars.

Das erfindungsgemässe Verfahren kann gemäss dieser Variante kaskadenartig auf eine Gruppe von Drucksensoren mit mehr als zwei Drucksensoren erweitert werden, wobei in einem ersten Paar von Drucksensoren einer die Rolle des ersten der andere die Rolle des zweiten Drucksensors hat. Der zweite Drucksensor kann in einem weiteren Paar von Drucksensoren die Rolle des ersten Drucksensors gemäss Verfahren haben, und so weiter. Voraussetzung für eine solche kaskadenartige Erweiterung des gesamten Druckmessmessbereichs der Gruppe ist, dass es jeweils überlappende Messbereiche zweier bezüglich ihres Messbereiches benachbarter Drucksensoren gibt.

Beispielsweise ist ein solches kaskadenartiges Verketten von Messbereichen verschiedener Drucksensoren in einer Gruppe von Drucksensoren möglich, welche ein Kapazitäts-Membran-Manometer, einen Pirani-Sensor und ein Ionisations-Manometer umfasst. Beispielsweise kann ein Justierpunkt für das Kapazitäts-Membran-Manometer als erster Drucksensor des ersten Paars und des Pirani-Sensors als zweitem Drucksensor des ersten Paars bei ca. 1 mbar festgelegt werden. Weiter kann ein Justierpunkt für den Pirani-Sensor als erster Drucksensor des zweiten Paars und für das Ionisations-Manometer als zweiter Drucksensor des zweiten Paars bei ca. 10⁻³ mbar festgelegt werden. Die Kalibrationen werden gemäss dieser Variante kaskadenartig verkettet. Beispielsweise kann es sich bei dem Ionisations-Manometer um ein Manometer des Bayard-Alpert-Typs oder eines anderen der oben erwähnten Ionisations-Manometer handeln. Beispielsweise kann die Gruppe von Drucksensoren einen vierten Drucksensor in Form eines Kapazitäts-Membran-Manometers mit Vollausschlag bei Atmosphärendruck handeln. In Kombination kann so ein "Quadrupel"-Drucksensor mit einem totalen Messbereich von Atmosphärendruck bis hinunter zu einem Druck von 10⁻¹⁰ mbar erhalten werden, welcher über den gesamten Messbereich durch den Betrieb gemäss der vorliegenden Erfindung eine hohe Genauigkeit, respektive eine weitgehende Unabhängigkeit von der Gasart, erreicht.

Weiter betrifft die Erfindung auch eine Vorrichtung nach Anspruch 15. Es handelt sich um eine Vorrichtung zur Durchführung des erfindungsgemässen Verfahrens.

Die Vorrichtung umfasst:
- eine Gruppe von Drucksensoren,
   wobei die Gruppe mindestens einen ersten Drucksensor mit einem ersten Druck-Messbereich und einen zweiten Drucksensor mit einem zweiten Druck-Messbereich umfasst, wobei der erste und der zweite Drucksensor so angeordnet sind, dass sie den Druck in einem gemeinsamen Messvolumen messen können und wobei der erste und der zweite Druck-Messbereich in einem Überlapp-Druck-Messbereich überlappen; und
- eine Steuereinheit, die mit einem ersten Signalausgang des ersten Drucksensors und mit einem zweiten Signalausgang des zweiten Drucksensors wirkverbunden ist zur Verarbeitung von Mess-Signalen der Drucksensoren, wobei die Steuereinheit dafür ausgelegt ist, das oben beschriebene Verfahren auszuführen.

Diese Vorrichtung kann insbesondere als Einheit (Drucksensor-Einheit, "pressure gauge") realisiert sein, welche alle genannten Elemente in einem gemeinsamen Gehäuse umfasst. Beispielsweise kann dieses Gehäuse einen Standard-Vakuumflansch zum Anschliessen an eine Vakuum-Anlage aufweisen. Beispielsweise kann diese Vorrichtung eine Datenschnittstelle aufweisen, welche ein einziges aufbereitetes Drucksignal nach aussen zur Verfügung stellt, wobei dieses aufbereitete Drucksignal unter Berücksichtigung aller Kalibrationen und aller verfügbaren Drucksensoren der Gruppe entsteht. Diese Einheit kann insbesondere ein noch zu besprechendes Computer-Programm-Produkt, beispielsweise in Form einer Firmware, beinhalten.

In einer Ausführungsform der Vorrichtung ist der erste Drucksensor ein Membran-Manometer. Der Überlapp-Druckmessbereich, in dem der erste und der zweite Druckmessbereich überlappen, umfasst den Druck 0.1 mbar. Die Gruppe von Drucksensoren umfasst einen dritten Drucksensor mit einem dritten Druck-Messbereich, wobei der dritte Druck-Messbereich den ersten Druckmessbereich zu grösseren Drücken hin erweitert.

Diese Ausführungsform der Vorrichtung kann beispielsweise durch folgende Kombination von Drucksensoren realisiert sein: Als ersten Druck-Sensor ein Kapazitäts-Membran-Manometer, als zweiter Druck-Sensor ein Pirani-Sensor und als dritter Sensor wiederum ein Kapazitäts-Membran-Manometer. Der erste Drucksensor kann beispielsweise einen Messbereich haben, der den Druck 0.1 mbar beinhaltet und drei Dekaden umfasst. Der Pirani-Sensor hat in diesem Beispiel einen Messbereich, der ebenfalls den Druck 0.1 mbar umfasst. Der dritte Drucksensor kann einen dritten Druck-Messbereich haben, welcher einen Vollausschlag bei Atmosphärendruck hat und so den Druckbereich der gesamten Gruppe von Drucksensoren zu hohen Drücken hin erweitert. Der dritte Druck-Messbereich kann mit dem ersten und/oder dem zweiten Druck-Messbereich überlappen. Alle drei Drucksensoren der Gruppe können in einem gemeinsamen Gehäuse verbaut sein.

In einer Ausführungsform umfasst die Vorrichtung mindestens ein Mittel zur Änderung des Drucks im gemeinsamen Messvolumen, wobei das mindestens eine Mittel zur Änderung des Drucks mit einer Drucksteuereinheit wirkverbunden ist zur Auslösung eines Senkens oder eines Erhöhens des Drucks im gemeinsamen Messvolumen.

Die Drucksteuereinheit kann die Steuereinheit zur Verarbeitung von Mess-Signalen der Drucksensoren sein oder sie kann mit dieser wirkverbunden sein, beispielsweise zur Übermittlung des Zustandes von Ventilen oder Pumpen oder zum Empfang von Steuerbefehlen, wie z.B. Ändern des Drucks als Vorbereitung für eine Justierung.

Das Mittel zur Änderung des Drucks kann beispielsweise eine Pumpe oder Ventile umfassen.

Noch weiter betrifft die Erfindung ein Computer-Programm-Produkt nach Anspruch 18.

Das erfindungsgemässe Computer-Programm-Produkt umfasst Befehle, die bei der Ausführung der Befehle durch eine Steuereinheit einer erfindungsgemässen Vorrichtung die Steuereinheit dazu veranlassen, die Schritte des erfindungsgemässen Verfahrens durchzuführen.

Das Computer-Programm-Produkt kann beispielsweise Firmware in einer Drucksensor-Anordnung umfassen oder es kann in Firmware in einer Drucksensor-Anordnung bestehen.

Ausführungsbeispiele der vorliegenden Erfindung werden nachstehend anhand von Figuren noch näher erläutert. Es zeigen
Fig. 1 ein Flussdiagramm eines bekannten Verfahrens;
Fig. 2 ein Flussdiagramm einer Ausführungsform des Verfahrens;
Fig. 3 ein Flussdiagramm des erfindungsgemässen Verfahrens;
Fig. 4 ein Flussdiagramm einer weiteren Ausführungsform des Verfahrens;
Fig. 5 ein Flussdiagramm einer Ausführungsform des Verfahrens, welche ein Nullen des ersten Drucksensors umfasst;
Fig. 6 schematisch mögliche relative Lagen von erstem und zweitem Druckmessbereich;
Fig. 7 schematisch eine Vorrichtung zur Durchführung des Verfahrens;
Fig. 8 schematisch einen zeitlichen Ablauf des Drucks in einer Variante des Verfahrens;
Fig. 9 zeigt in einer doppelt-logarithmischen Darstellung die Abhängigkeit eines mittels Pirani-Sensors bestimmten Drucks von der Gasart;
Fig. 10 bis 12 zeigen anhand von doppelt-logarithmischen Diagrammen zum angezeigten Druck in Abhängigkeit des effektiven Drucks zwei Möglichkeiten, wie das gasartabhängige Druckmesssignal des zweiten, gasartabhängigen Drucksensors durch das Verfahren mit einem oder mehreren Kalibrierfaktoren adjustiert werden kann, so dass die Druckmessung auch im Bereich, wo nur der zweite gastartabhängige Drucksensor misst, die Druckmessung entsprechend korrigiert und die Gasartabhängigkeit eliminiert wird.

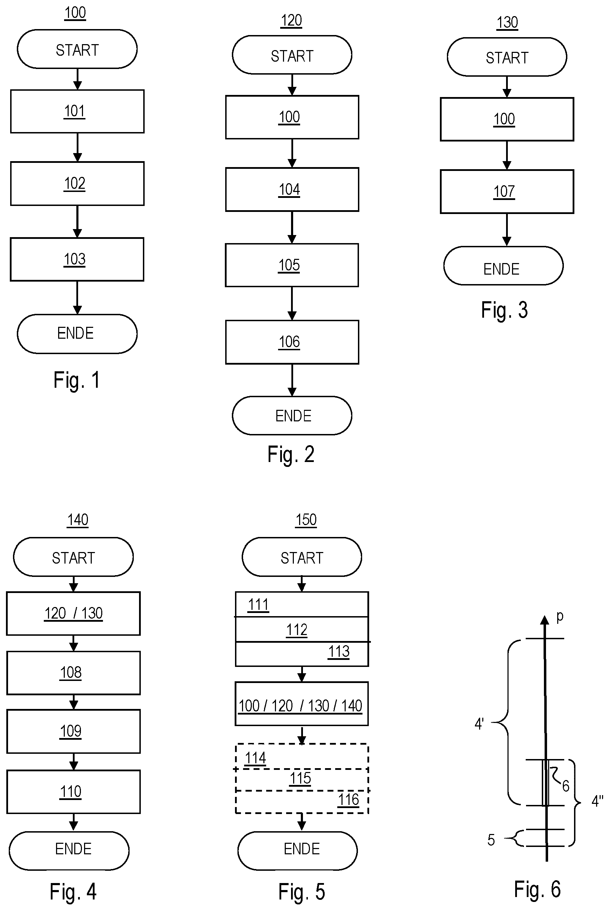

In Figur 1 ist ein Flussdiagramm eines bekannten Verfahrens 100 gezeigt. Das Verfahren umfasst die Schritte aa) im Wesentlichen gleichzeitiges Auslesen 101 eines ersten Mess-Signals des ersten Drucksensors und eines zweiten Mess-Signals des zweiten Drucksensors während der Druck im gemeinsamen Messvolumen im Überlapp-Druck-Messbereich liegt;
bb) Festlegen 102 des ausgelesenen ersten Mess-Signals als Justierpunkt für den zweiten Drucksensor;
cc) Bestimmen 103 mindestens eines gasabhängigen Kalibrierungsparameters K1, K2 für den zweiten Drucksensor in Funktion des ersten Mess-Signals, in Funktion des in Schritt bb) festgelegten Justierpunkts für den zweiten Drucksensor und in Funktion des zweiten Mess-Signals.

Die Schritte 101, 102 und 103 werden sequenziell durchgeführt.

In Figur 2 ist ein Flussdiagramm einer Ausführungsform 120 des Verfahrens gezeigt. Zunächst werden sämtliche Schritte des Verfahrens 100 durchgeführt. Danach folgen die Schritte dd) ein weiteres Mal im Wesentlichen gleichzeitiges Auslesen 104 eines weiteren ersten Mess-Signals des ersten Drucksensors und eines weiteren zweiten Mess-Signals des zweiten Drucksensors während der Druck im gemeinsamen Messvolumen im Überlapp-Druck-Messbereich liegt und wobei der Druck im gemeinsamen Messvolumen verschieden ist vom Druck im Schritt aa);
ee) Festlegen 105 des weiteren ausgelesenen ersten Mess-Signals als weiteren Justierpunkt für den zweiten Drucksensor;
ff) Bestimmen 106 eines weiteren Kalibrierungsparameters K2, insbesondere eines weiteren gasabhängigen Kalibrierungsparameters, für den zweiten Drucksensor in Funktion des weiteren ersten Mess-Signals, in Funktion des in Schritt ee) festgelegten weiteren Justierpunkts und in Funktion des weiteren zweiten Mess-Signals.

In Figur 3 ist ein Flussdiagramm des erfindungsgemässen Verfahrens 130 gezeigt. Zunächst werden sämtliche Schritte des Verfahrens 100 durchgeführt. Danach folgt der Schritt gg) Entscheiden 107, ob eine im gemeinsamen Messvolumen 2 vorhandene Gaszusammensetzung von einer Soll-Vorgabe abweicht, wobei eine Abweichung vom aktuellen Druck-Messwert gegenüber einem aus dem ersten Mess-Signal abgeleiteten Druck-Messwert berücksichtigt wird, wobei das Auslesen des ersten Mess-Signal im Wesentlich gleichzeitig mit dem Auslesen des aktuellen zweiten Mess-Signals und während der Druck im gemeinsamen Messvolumen im Überlapp-Druck-Messbereich 6 liegt erfolgt.

In Figur 4 ist ein Flussdiagramm einer Ausführungsform 140 des Verfahrens gezeigt. Zunächst werden alternativ die Schritte der Variante 120 (siehe Fig. 2) oder der erfindungsgemässen Variante 130 (siehe Fig. 3) durchgeführt. Danach folgen die Schritte
hh) Bestimmen 108 einer Abweichung dieser Steigung von einer für ein Referenzgas, in diesem Fall das Gas Stickstoff, erwarteten Steigung;
ii) Vergleichen 109 der in Schritt hh) bestimmten Abweichung mit einer vorgegebenen Toleranzschwelle für die Abweichung;
jj) bei Überschreiten der Toleranzschwelle, Auslösen 110 eines Alarms für das Vorhandensein von Wasserdampf im gemeinsamen Messvolumen 2.

In Figur 5 ist ein Flussdiagramm einer Ausführungsform 150 des Verfahrens gezeigt. Es handelt sich hier um eine Kombination, bei welcher die Sequenz von Schritten 111, 112, 113 zum Nullen des ersten Drucksensor vorab durchgeführt wird, bevor die Schritte einer der Ausführungsformen, alternativ gemäss einem der Diagramme 100, 120, 130 oder 140, folgen. Gestrichelt umrandet wird eine weitere Sequenz von Schritten 114, 115 und 116 gezeigt, durch deren Hinzunahme eine weitere Ausführungsform entsteht. Die mit Pfeilen getrennten Blöcke in Fig. 5 können zeitlich weit auseinanderliegend durchgeführt werden. In einem Block zusammengefasste Schritte werden bevorzugt unmittelbar nacheinander durchgeführt.

Figur 6 zeigt schematisch die relative Lage von erstem 4' und zweitem 4'' Druck-Messbereich des ersten 1' resp. zweiten 1'' Drucksensors der Gruppe von Drucksensoren auf einer Druck-Achse p. Die Druck-Achse p ist hier schematisch zu verstehen, es könnte sich beispielsweise um eine lineare Achse oder auch um eine logarithmische Achse handeln. Hohe Drücke sind auf der Achse weiter oben eingezeichnet als niedrigere Drücke. Ein Überlapp-Druck-Messbereich 6 existiert, in welchem der erste 4' und der zweite 4'' Druck-Messbereich überlappen. Das Auslesen des ersten und zweiten Mess-Signals im Schritt aa) des Verfahrens findet statt, während der Druck im gemeinsamen Messvolumen in diesem Überlapp-Druck-Messbereich 6 liegt.

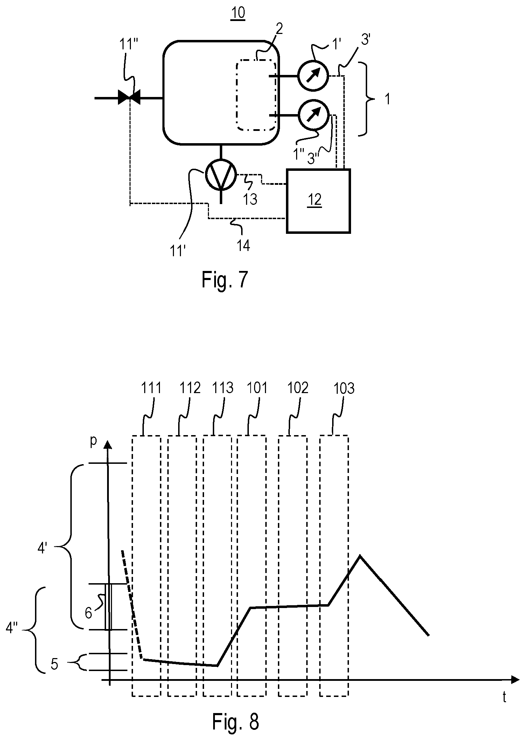

Im hier gezeigten Beispiel ist weiter der Fall gezeigt, dass der zweite Druck-Messbereich 4'' einen Niedrigdruckbereich 5 umfasst, in welchem der Druck niedriger ist als eine untere Grenze des ersten Druck-Messbereichs 4'. Während der Druck in diesem Niedrigdruckbereich liegt, kann der Drucksensor mit dem höher liegenden Druck-Messbereich (4') genullt werden, siehe der in Fig. 8 gezeigte Ablauf.

In Figur 7 ist schematisch eine beispielhafte Vorrichtung 10 zur Durchführung des Verfahrens gezeigt. Die Vorrichtung umfasst eine Gruppe 1 von Drucksensoren, mit mindestens einem ersten Drucksensor 1' und einem zweiten Drucksensor 1'', welche Drücke in einem gemeinsamen Messvolumen 2 messen können. Das Messvolumen 2 kann insbesondere ein Teilvolumen einer Vakuumkammer sein, wie schematisch durch den strichpunktiert umrandeten Bereich angedeutet ist. Der erste Drucksensor 1' ist dazu eingerichtet, ein erstes Mess-Signal 3' an eine Steuereinheit 12 weiterzuleiten. Der zweite Drucksensor 1" ist dazu eingerichtet ein zweites Mess-Signal 3'' an die Steuereinheit 12 weiterzuleiten. Die Steuereinheit hat im gezeigten Beispiel eine Wirkverbindung 13 zum Ansteuern einer Pumpe 11' und eine Wirkverbindung 14 zum Ansteuern eines Einlassventils 11''. Pumpe 11' und Einlassventil 11'' sind Mittel zur Änderung des Drucks in der Kammer, an die sie angeschlossen sind und damit insbesondere auch Mittel zur Änderung des Drucks im gemeinsamen Messvolumen 2, das ein Teilvolumen der Kammer umfasst. Die mit gestrichelten Linien eingezeichneten Mess-Signal und Wirkverbindung können beispielsweise drahtgebunden umgesetzt sein, sie können beispielsweise auch über Funksignale (Bluetooth, etc.) oder optische Signalübertragung verwirklicht sein.

Die Teile der gezeigten Vorrichtung oder die komplette Vorrichtung kann in einem gemeinsamen Gehäuse eingebaut sein. Insbesondere kann die Gruppe der Drucksensoren und die Steuereinheit in einen Gemeinsamen Gehäuse zu einer Drucksensor-Einheit kombiniert sein. In der gezeigten Anordnung übernimmt die Steuereinheit 12, welche zur Verarbeitung der Mess-Signale ausgelegt ist, auch die Ansteuerung der Mittel zur Änderung des Drucks. Die letztere Funktion kann auch durch eine separate DruckSteuereinheit übernommen werden.

Figur 8 zeigt in einem Zeit-Druck-Diagramm schematisch einen zeitlichen Ablauf des Drucks in einer Variante des Verfahrens. In horizontaler Richtung ist die Zeit t dargestellt, in vertikaler Richtung verläuft die Druck-Achse p, wobei dieselben Druckbereiche eingezeichnet sind, wie in Figur 6. Der zeitliche Druckverlauf ist durch die dicke Linie eingezeichnet. Gestrichelt umrandete Rechtecke markieren die zeitliche Lage der einzelnen Verfahrensschritte. Vorausgeht nötigenfalls ein Schritt des Absenkens von einem Druck oberhalb des Niedrigdruckbereichs 5 in den Niedrigdruckbereich. Die Schritte Überprüfen 111, Auslesen 112 und Festlegen 113 des Nullpunkt-Signals erfolgen alle bei einem Druck im Niedrigdruckbereich 5. Das im Schritt 113 bestimmte Nullpunkt-Signal kann jetzt dazu verwendet werden, das aktuelle erste Mess-Signal in einen akkuraten Druck-Messwert zu übersetzen, welcher von einem allfälligen Nullpunkt-Drift des ersten Drucksensor unabhängig ist. Danach erfolgt im gezeigten Beispiel ein Erhöhen des Drucks in den Überlapp-Druck-Messbereich 6. Die Schritte 101, 102 und 103 des Grundablaufs des Verfahrens werden in diesem Überlapp-Druck-Messbereich 6 durchgeführt. Danach folgen weitere Schritte, bei denen auf das Nullen und die Kalibrierungsparameter zurückgegriffen wird, um so die Messgenauigkeit über den gesamten Messbereich der Gruppe von Drucksensoren zu erhöhen.

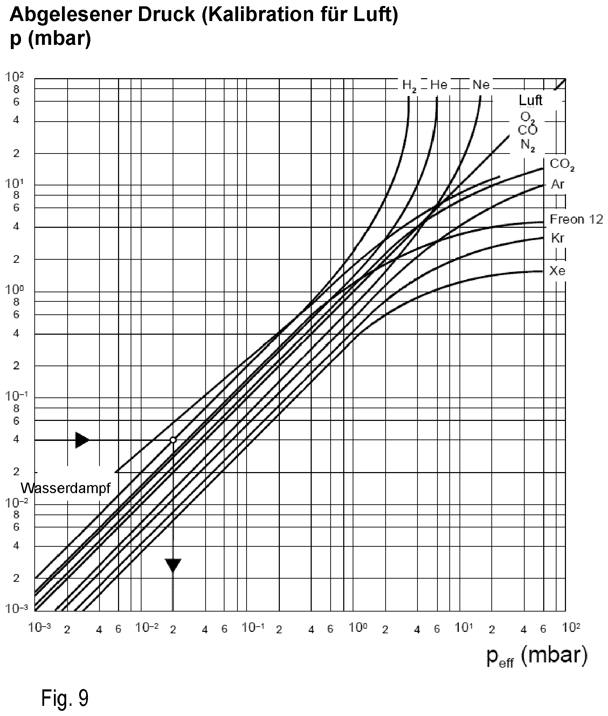

Figur 9 zeigt in einer doppelt-logarithmischen Darstellung die Abhängigkeit eines mittels eines Pirani-Sensors bestimmten Drucks von einer bestimmten Gasart. In horizontaler Richtung ist der "effektive" Druck p_{eff} eingezeichnet, welcher mit einem Gasart-unabhängigen Sensor bestimmt ist, z.B. mit einem CDG-Drucksensor, welcher im Rahmen des Verfahrens die Rolle des ersten Drucksensors haben kann. In vertikaler Richtung ist der an einem Pirani-Sensor abgelesene Druck p (mbar) in Abhängigkeit vom effektiven Druck p_{eff} (mbar) für verschiedene Gasarten je mit einer separaten Kurve aufgetragen, siehe die Beschriftung zu jeder Kurve im Bereich oben rechts der Grafik. Der gezeigte Druckbereich reicht auf beiden Achsen von 10⁻³ mbar bis 10² mbar, d.h. über 5 Grössenordnungen. Der Pirani-Sensor ist in diesem Fall so kalibriert, dass er für die Gasart Luft den Druck p_{eff} anzeigt, d.h. die Druckkurve zu Luft (Air) ist im doppelt-logarithmischen Plot eine gerade Linie auf der Diagonalen. In einem Druckbereich unterhalb von ca. 1 mbar kann der Effekt der Gasart durch einen Faktor zwischen p_{eff} und dem mit dem Pirani-Sensor gemessenen Druck p beschrieben werden. Bei höheren Drücken tritt eine für die Gasart charakteristische, nicht-lineare Abweichung vom Druck p_{eff} auf. Es kann beim Bestimmen eines ersten Druck-Messwertes der effektive Druck p_{eff} gemessen werden und im Schritt Bestimmen eines zweiten Druck-Messwertes der Druck p bestimmt werden. Unter Verwendung von abgespeicherten Kurven der in Figur 9 dargestellten Art kann eine aus der Abweichung zwischen p und p_{eff} eine Aussage darüber gemacht werden, ob die im Messvolumen vorhandene Gaszusammensetzung zu einer erwarteten Gaszusammensetzung passt, oder ob die effektive Gaszusammensetzung von einer Soll-Vorgabe abweicht (siehe Schritt gg), 107). Beispielsweise führt das Vorhandensein von Wasserstoff (H₂) über den gesamten gezeigten Druckbereich zu einem deutlich höheren am Pirani-Sensor abgelesenen Druckwert, als dies beispielsweise für die Gasart Stickstoff (N₂) erwartet würde. Eine mögliche Anwendung dieser Auswertung sind Leckmessungen. Eine Bestimmung eines Fremdgases, sowie eine Abschätzung für dessen Konzentration ist möglich. Das Ausmass der Abweichung von einer Soll-Vorgabe kann beispielsweise als Basis für eine Go/No-go Entscheidung für weitere ProzessSchritte herangezogen werden.

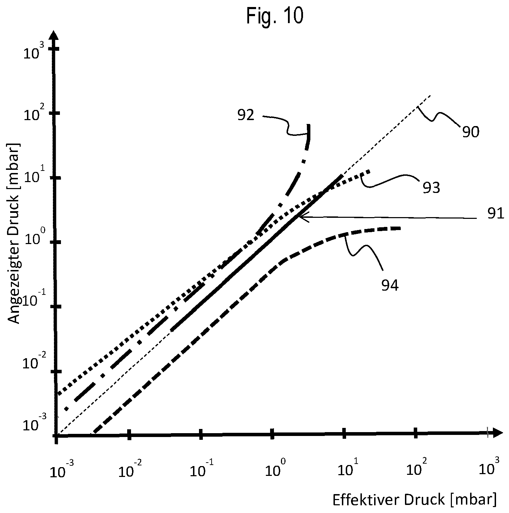

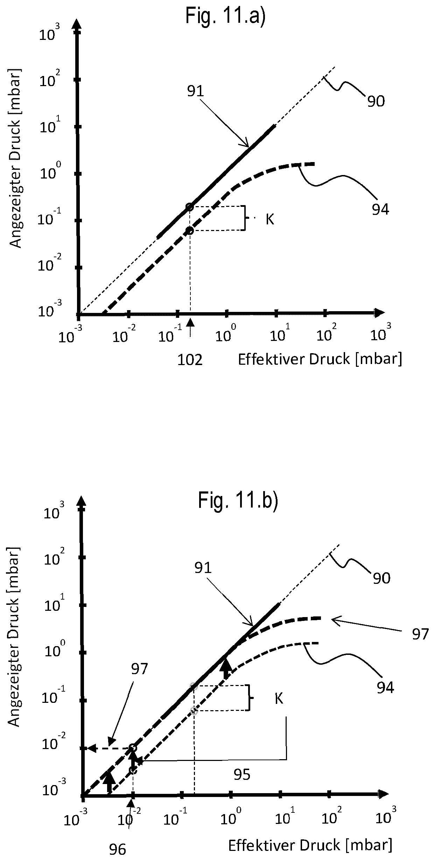

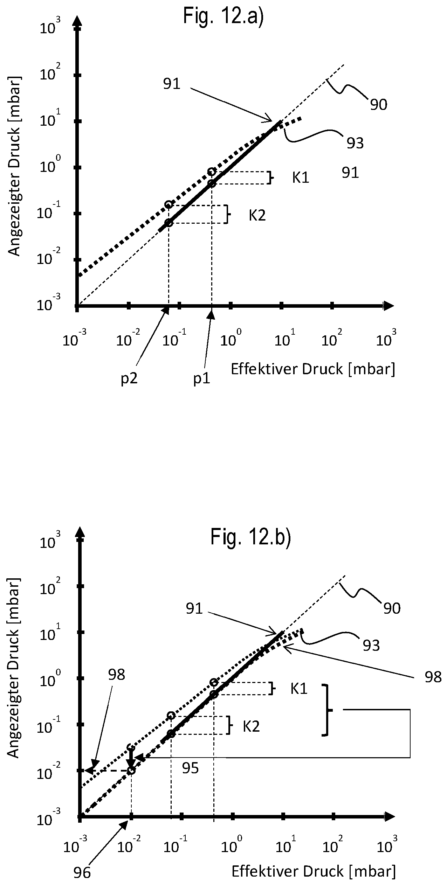

Fig. 10 zeigt in einer doppelt-logarithmischen Darstellung die Basissituation für die in Fig. 11 und 12 erklärten zwei Möglichkeiten, wie das gasartabhängige Druckmesssignal des zweiten, gasartabhängigen Drucksensors durch das Verfahren mit einem oder mehreren Kalibrierfaktoren adjustiert werden kann, so dass die Druckmessung auch im Bereich, wo nur der zweite
gastartabhängige Drucksensor misst, die Druckmessung entsprechend korrigiert und die Gasartabhängigkeit eliminiert wird. Die Darstellung ist wie in Fig. 9. Die dünne gestrichelte Linie zeigt das angestrebte optimale Ausgangssignal 90, für das gilt: effektiver Druck (horizontale Achse) = angezeigter Druck (vertikale Achse). Weiter gezeigt sind das Signal 91 des ersten Drucksensors (in diesem Fall für alle Gase identisch), das Signal 92 des zweiten Drucksensors in H2, Signal 93 des zweiten Drucksensors in Wasserdampf und das Signal 94 des zweiten Drucksensors in Xenon. Drücke über 6 Grössenordnungen von 10⁻³ mbar bis 10⁺³ mbar sind im Diagramm dargestellt.

In Fig. 10 werden die Ausgangssignale 91 eines gasartunabhängigen Sensors 1, hier eines kapazitiven Membransensors mit einem Vollausschlag von 10 mbar und einem Arbeitsbereich von 2.5 Dekaden, sowie die Ausgangssignale 92, 93, 94 eines gasartabhängigen Pirani-Sensors für verschiedene Gase gezeigt. Es ergibt sich ein Überlapp-Druckmessbereich im Bereich von 5×10⁻² mbar bis ca. 5 mbar für alle Gase, wobei das obere Messbereichsende des Pirani-Sensors bei 5 mbar für H₂ als Testgas gilt. Hervorzuheben ist hier der interessante Überlapp-Druckmessbereich von 5×10⁻² mbar bis ca. 0.4 mbar, in welchem die allermeisten Gaskennlinien von Fig. 9 wie Fig. 10 linear in doppelt-logarithmischer Darstellung sind.

Wird nun wie in Fig. 11.a) für Xenon in diesem Ueberlapp-Druckmessbereich durch gleichzeitiges Auslesen ein Kalibrierparameter K für die Pirani-Kennlinie ermittelt, so kann, wie in Fig. 11.b) gezeigt, die Pirani-Kennlinie durch Adjustierung der Kurve mittels des Kalibrationsfaktors derart adjustiert werden, so dass auch im Niedrigdruckbereich 5, in welchem der Druck nur noch durch das Pirani ausgelesen werden kann, ein korrektes Messsignal ausgegeben wird. Der Effekt der Adjustierung 95 des Signals des zweiten Drucksensors wird durch fette Pfeile illustriert. Die Kurve des adjustierten Anzeigesignals 97 in Xenon wird beispielsweise in einem Verfahrensschritt beim effektiven Druck 96 abgelesen und führt zum Anzeigesignal 97, wie mit gestrichelter Linie angezeigt. Im Fall, wie er in Fig. 11 gezeigt ist, wird als Justierpunkt ein Druck zwischen 0.1 und 1 mbar bestimmt 102, genauer ca. 0.2 mbar.

In Fig. 12.a) und 12.b) wird gezeigt, dass die Adjustierungsmethode verbessert werden kann, wenn mehrere Druckpunkte im Verfahren verwendet werden. Durch gleichzeitiges Auslesen bei verschiedenen Druckpunkten p1 und p2, ergeben sich je nach ausgelesenem Druckpunkt des gasartunabhängigen Sensors 1 verschiedene Kalibrationsparameter, in diesem Fall K1 und K2, siehe Fig. 12.a). Durch geeignete Korrekturverfahren wie z.B. ein druckabhängiger Kalibrationsfaktor erster Ordnung im Druck können nun auch Kennlinien, welche wie beim Wasserdampf eine zu andern Gasen unterschiedliche Steigung in doppelt-logarithmischer Darstellung haben, korrigiert werden, so dass wiederum im Niedrigdruckbereich 5, in welchem der Druck nur noch durch das Pirani ausgelesen werden kann, das korrekte Messsignal ausgegeben wird. Der Effekt der Adjustierung 95 des Signals des zweiten Drucksensors wird durch fette Pfeile illustriert. Die Kurve des adjustierten Anzeigesignals 98 in Wasserdampf wird beispielsweise in einem Verfahrensschritt beim effektiven Druck 96 abgelesen und führt zum Anzeigesignal 98, wie mit gestrichelter Linie angezeigt. Die Drücke p1 und p2, welche die Rolle von Justierpunkten haben, liegen etwas weniger als eine Dekade auseinander. Konkret gezeigt ist hier p1 ca. 0.5 mbar und p2 ca. 0.07 mbar.

Zusammenfassend können mit dem beschriebenen Verfahren also folgende Wirkungen erzielt werden:
a) die Genauigkeit der Druckmessung über den gesamten Druckmessbereich erhöhen,
b)die Gasartabhängigkeit auch im Messbereich von Drucksensoren mit gasartabhängigen Druckmessprinzipien minimieren,
d) die Möglichkeit eröffnen, über die Druckmessung hinaus auch in gewissen Grenzen die Gaszusammensetzung bestimmen,
e) den Benutzer auf eine Änderung der Gaszusammensetzung oder zumindest auf eine Änderung in einer gasartabhängigen Druckmessung hinweisen, um so auf ungewollte Systemänderungen aufmerksam zu machen, und
f) als sekundäre Funktion das Nullen von Drucksensoren erleichtern.

Mit der vorliegenden Erfindung können vor allem die unter den Punkten d) & e) aufgeführten Wirkungen erzielt werden.

### Bezugszeichenliste

1 Gruppe von Drucksensoren
1' erster Drucksensor der Gruppe
1" zweiter Drucksensor der Gruppe
2 gemeinsames Messvolumen der Drucksensoren
3' erstes Mess-Signal
3" zweites Mess-Signal
4' erster Druck-Messbereich
4" zweiter Druck-Messbereich
5 Niedrigdruckbereich
6 Überlapp-Druck-Messbereich
10 Vorrichtung zur Durchführung des Verfahrens
11' Pumpe
11'' Einlassventil
12 Steuereinheit
13 Wirkverbindung (zum Ansteuern einer Pumpe)
14 Wirkverbindung (zum Ansteuern eines Einlassventils)
90 optimales Ausgangssignal (effektiver Druck = angezeigter Druck)
91 Signal des ersten Drucksensors (für alle Gase)
92 Signal des zweiten Drucksensors in H2
93 Signal des zweiten Drucksensors in Wasserdampf
94 Signal des zweiten Drucksensors in Xenon
95 Adjustierung des Signals des zweiten Drucksensors
96 effektiver Druck in Verfahrensschritt 1xx
97 adjustiertes Anzeigesignal in Xenon
98 adjustiertes Anzeigesignal in Wasserdampf
100 erfindungsgemässes Verfahren
101 Schritt aa) Auslesen des ersten und zweiten Mess-Signals
102 Schritt bb) Festlegen Justierpunkt
103 Schritt cc) Bestimmen mindestens eines Kalibrierungsparameters
104 Schritt dd) weiteres Auslesen des ersten und zweiten Mess-Signals
105 Schritt ee) eines weiteren Justierpunkts
106 Schritt ff) Bestimmen eines weiteren Kalibrierungsparameters
107 Schritt gg) Bestimmen aktueller Druck-Messwertes
108 Schritt hh) Bestimmen Abweichung von einer erwarteten Steigung
109 Schritt ii) Vergleichen der Abweichung mit Toleranzschwelle
110 Schritt jj) Auslösen Alarm Wasserdampf
111 Schritt kk) Überprüfen ob Niedrigdruckbereich erreicht
112 Schritt ll) Auslesen eines ersten Mess-Signals (während Druck im Niedrigdruckbereicht)
113 Schritt mm) Festlegen Nullpunkt-Signal
114 Schritt nn) Erhöhen des Drucks
115 Schritt oo) Auslesen eins aktuellen ersten Mess-Signals
116 Schritt PP) Bestimmen eines aktuellen Druck-Messwertes (Nullpunkt-Signal berücksichtigt)
120, 130, 140, 150 Ausführungsformen des Verfahrens
K, K1, K2 Kalibrierungsparameter
p Druck
p1 Messpunkt 1 (Druck)
p2 Messpunkt 2 (Druck)
t Zeit
START Beginn eines Verfahrens (in einem Flussdiagramm)
ENDE Ende eines Verfahrens (in einem Flussdiagramm)

## Patentansprüche

1. Verfahren (100) zum Betrieb einer Gruppe (1) von Drucksensoren,
wobei die Gruppe mindestens einen ersten Drucksensor (1') mit einem ersten Druck-Messbereich (4') und einen zweiten Drucksensor (1'') mit einem zweiten Druck-Messbereich (4") umfasst, wobei der erste und der zweite Drucksensor so angeordnet sind, dass sie den Druck in einem gemeinsamen Messvolumen (2) messen können, wobei der erste (4') und der zweite (4") Druck-Messbereich in einem Überlapp-Druck-Messbereich (6) überlappen und wobei das Verfahren die Schritte umfasst:
aa) im Wesentlichen gleichzeitiges Auslesen (101) eines ersten Mess-Signals des ersten Drucksensors und eines zweiten Mess-Signals des zweiten Drucksensors während der Druck im gemeinsamen Messvolumen im Überlapp-Druck-Messbereich liegt;
bb) Festlegen (102) des ausgelesenen ersten Mess-Signals als Justierpunkt für den zweiten Drucksensor;
cc) Bestimmen (103) mindestens eines gasabhängigen Kalibrierungsparameters (K1, K2) für den zweiten Drucksensor in Funktion des ersten Mess-Signals, in Funktion des in Schritt bb) festgelegten Justierpunkts und in Funktion des zweiten Mess-Signals,
**dadurch gekennzeichnet, dass** ein aktueller Druck-Messwert im Messvolumen in Funktion eines aktuellen zweiten Mess-Signals und des vorher bestimmten mindestens einen Kalibrierungsparameters (K1) oder der vorher bestimmten Kalibrierungsparameter (K1, K2) ermittelt wird, und
das Verfahren weiter den Schritt umfasst:
gg) Entscheiden (107), ob eine im gemeinsamen Messvolumen (2) vorhandene Gaszusammensetzung von einer Soll-Vorgabe abweicht, wobei eine Abweichung vom aktuellen Druck-Messwert gegenüber einem aus dem ersten Mess-Signal abgeleiteten Druck-Messwert berücksichtigt wird, wobei das Auslesen des ersten Mess-Signals im Wesentlich gleichzeitig mit dem Auslesen des aktuellen zweiten Mess-Signals und während der Druck im gemeinsamen Messvolumen im Überlapp-Druck-Messbereich (6) liegt erfolgt.

2. Verfahren (100) nach Anspruch 1, wobei der Justierpunkt für den zweiten Drucksensor im Druckbereich 10⁻² mbar bis 10⁰ mbar, insbesondere im Druckbereich 0.1 bis 0.4 mbar, liegt.

3. Verfahren (120) nach Anspruch 1 oder 2, wobei das Verfahren weiter die Schritte umfasst:
dd) ein weiteres Mal im Wesentlichen gleichzeitiges Auslesen (104) eines weiteren ersten Mess-Signals des ersten Drucksensors und eines weiteren zweiten Mess-Signals des zweiten Drucksensors während der Druck im gemeinsamen Messvolumen im Überlapp-Druck-Messbereich liegt und wobei der Druck im gemeinsamen Messvolumen verschieden ist vom Druck im Schritt aa), insbesondere wobei sich der Druck im gemeinsamen Messvolumen um einen Faktor zwei, um eine Dekade oder mehr vom Druck im Schritt aa) unterscheidet;
ee) Festlegen (105) des weiteren ausgelesenen ersten Mess-Signals als weiteren Justierpunkt für den zweiten Drucksensor;
ff) Bestimmen (106) eines weiteren Kalibrierungsparameters (K2), insbesondere eines weiteren gasabhängigen Kalibrierungsparameters, für den zweiten Drucksensor in Funktion des weiteren ersten Mess-Signals, in Funktion des in Schritt ee) festgelegten weiteren Justierpunkts und in Funktion des weiteren zweiten Mess-Signals.

4. Verfahren (140) nach Anspruch 3, wobei der in Schritt ff) bestimmte weitere Kalibrierungsparameter eine Steigung in einem doppelt-logarithmischen Funktionsdiagramm des zweiten Mess-Signals in Abhängigkeit des ersten Mess-Signals ist oder wobei aus dem im Schritt cc) bestimmten Kalibrierungsparameter und dem im Schritt ff) bestimmten Kalibrierungsparameter eine Steigung in einem doppelt-logarithmischen Funktionsdiagramm des zweiten Mess-Signals in Abhängigkeit des ersten Mess-Signals berechnet wird, und wobei das Verfahren weiter die Schritte umfasst:
hh) Bestimmen (108) einer Abweichung dieser Steigung von einer für ein Referenzgas, beispielsweise das Gas Stickstoff, erwarteten Steigung;
ii) Vergleichen (109) der in Schritt hh) bestimmten Abweichung mit einer vorgegebenen Toleranzschwelle für die Abweichung;
jj) bei Überschreiten der Toleranzschwelle, Auslösen (110) eines Alarms für das Vorhandensein von Wasserdampf im gemeinsamen Messvolumen (2).

5. Verfahren (100, 120, 130, 140) nach einem der Ansprüche 1 bis 4, wobei der erste Drucksensor (1') ein Drucksensor eines von einer Gaszusammensetzung im Messvolumen unabhängigen Drucksensor-Typs ist und wobei der zweite Drucksensor (1'') ein Drucksensors eines von der Gaszusammensetzung im Messvolumen abhängigen Drucksensor-Typs ist,
insbesondere wobei der zweite Drucksensor (1'')
- ein Wärmeleitungs-Vakuummeter, insbesondere nach Pirani oder mit Thermocouple Sensor, oder
- ein Ionisations-Vakuummeter mit Kaltkathode, insbesondere ein Ionisations-Vakuummeter nach Penning, oder ein nichtinvertiertes Magnetron oder ein invertiertes Magnetron, oder
- ein Ionisations-Vakuummeter mit Glühkathode, insbesondere ein Ionisations-Vakuummeter nach Bayard-Alpert, ein Ionisations-Vakuummeter mit Extractor oder mit Triode, oder
- ein Spinning-Rotor-Gauge-Sensor
ist.

6. Verfahren (100, 120, 130, 140) nach einem der Ansprüche 1 bis 5, wobei der erste Drucksensor (1') ein Membran-Manometer, insbesondere ein Kapazitätsmembran-Manometer, insbesondere ein keramisches Kapazitätsmembran-Manometer, oder ein optisches Membran-Manometer ist.

7. Verfahren (100, 120, 130, 140) nach einem der Ansprüche 1 bis 6, wobei der zweite Drucksensor (1'') ein Wärmeleitungs-Vakuummeter, insbesondere nach Pirani oder ein Thermocouple ist.

8. Verfahren (100, 120, 130, 140) nach einem der Ansprüche 1 bis 7, wobei die Schritte aa), bb) und cc) in regelmässigen Zeitabständen, insbesondere einmal täglich oder einmal wöchentlich, wiederholt werden.

9. Verfahren (100, 120, 130, 140) nach einem der Ansprüche 1 bis 8 zum Betrieb einer Vakuumprozessanlage, welche die Gruppe (1) von Drucksensoren umfasst, wobei die Schritte aa), bb) und cc) einmal pro Prozesszyklus der Vakuumprozessanlage wiederholt werden.

10. Verfahren (150) nach einem der Ansprüche 1 bis 9, wobei der zweite Druck-Messbereich einen Niedrigdruckbereich (5) umfasst, in welchem der Druck niedriger ist als eine untere Grenze des ersten Druck-Messbereichs,
wobei das Verfahren die Schritte umfasst:
kk) Überprüfen (111), ob der Niedrigdruckbereich erreicht ist anhand eines zweiten Mess-Signals (3") des zweiten Drucksensors;
ll) Auslesen (112) eines ersten Mess-Signals (3') des ersten Drucksensors, während der Druck im gemeinsamen Messvolumen im Niedrigdruckbereich liegt; und
mm) Festlegen (113) des ausgelesenen ersten Mess-Signals als Nullpunkt-Signal für den ersten Drucksensor.

11. Verfahren (150) nach Anspruch 10, wobei das Verfahren weiter die Schritte umfasst:
nn) Erhöhen (114) des Drucks im gemeinsamen Messvolumen in den ersten Druck-Messbereich (4');
oo) Auslesen (115) eines aktuellen ersten Mess-Signals (3') des ersten Drucksensors;
pp) Bestimmen (116) eines aktuellen Druck-Messwertes als Funktion des aktuellen ersten Mess-Signals und des in Schritt mm) bestimmten Nullpunkt-Signals, insbesondere als Funktion einer Differenz des aktuellen ersten Mess-Signals und des Nullpunkt-Signals.

12. Verfahren (150) nach einem der Ansprüche 10 oder 11, wobei der Niedrigdruckbereich (5) nur Drücke umfasst, welche um mindestens einen Faktor zehn, insbesondere mindestens um einen Faktor hundert, kleiner sind, als die untere Grenze des ersten Druck-Messbereichs.

13. Verfahren (150) nach einem der Ansprüche 10 bis 12, wobei der Niedrigdruckbereich (5) den Bereich 10⁻³ mbar bis 10⁻⁴ mbar umfasst.

14. Verfahren nach einem der Ansprüche 1 bis 13, wobei die Gruppe von Drucksensoren mindestens drei Drucksensoren umfasst und wobei die Schritte gemäss Anspruch 1 auf ein erstes Paar von Drucksensoren aus der Gruppe von Drucksensoren angewendet werden und wobei die Schritte gemäss Anspruch 1 auf ein zweites Paar von Drucksensoren aus der Gruppe von Drucksensoren angewendet werden, wobei einer der Drucksensoren des ersten Paars auch ein Drucksensor des zweiten Paars ist.

15. Vorrichtung (10) zur Durchführung eines Verfahrens nach einem der Ansprüche 1 bis 14, wobei die Vorrichtung umfasst:
- eine Gruppe (1) von Drucksensoren,
wobei die Gruppe mindestens einen ersten Drucksensor (1') mit einem ersten Druck-Messbereich (4') und einen zweiten Drucksensor (1'') mit einem zweiten Druck-Messbereich (4'') umfasst, wobei der erste und der zweite Drucksensor so angeordnet sind, dass sie den Druck in einem gemeinsamen Messvolumen (2) messen können und wobei der erste (4') und der zweite (4'') Druck-Messbereich in einem Überlapp-Druck-Messbereich (6) überlappen; und
- eine Steuereinheit (12), die mit einem ersten Signalausgang des ersten Drucksensors und mit einem zweiten Signalausgang des zweiten Drucksensors wirkverbunden ist zur Verarbeitung von Mess-Signalen (3', 3'') der Drucksensoren, wobei die Steuereinheit dafür ausgelegt ist, das Verfahren nach einem der Ansprüche 1 bis 14 auszuführen.

16. Vorrichtung (10) nach Anspruch 15, wobei der erste Drucksensor (1') ein Membran-Manometer ist, wobei der Überlapp-Druckmessbereich (6), in dem der erste (4') und der zweite (4'') Druckmessbereich überlappen, den Druck 0.1 mbar umfasst und wobei die Gruppe (1) von Drucksensoren einen dritten Drucksensor mit einem dritten Druck-Messbereich umfasst, wobei der dritte Druck-Messbereich den ersten Druckmessbereich zu grösseren Drücken hin erweitert.

17. Vorrichtung (10) nach einem der Ansprüche 15 oder 16, weiter umfassend mindestens ein Mittel zur Änderung des Drucks im gemeinsamen Messvolumen, wobei das mindestens eine Mittel zur Änderung des Drucks mit einer Drucksteuereinheit (12) wirkverbunden ist zur Auslösung eines Senkens oder eines Erhöhens des Drucks im gemeinsamen Messvolumen.

18. Computer-Programm-Produkt umfassend Befehle, die bei der Ausführung der Befehle durch eine Steuereinheit (12) einer Vorrichtung (10) nach einem der Ansprüche 15 bis 17 die Steuereinheit dazu veranlassen, die Schritte eines Verfahrens (100, 120, 130, 140, 150) gemäss einem der Ansprüche 1 bis 14 durchzuführen.

## Claims

1. Method (100) for operating a group (1) of pressure sensors,
wherein the group comprises at least a first pressure sensor (1') having a first pressure measurement range (4') and a second pressure sensor (1") having a second pressure measurement range (4"), wherein the first and second pressure sensors are arranged in such a manner that they can measure the pressure in a common measurement volume (2), wherein the first (4') and second (4") pressure measurement ranges overlap in an overlap pressure measurement range (6), and wherein the method comprises the steps of:
aa) reading out (101) a first measurement signal of the first pressure sensor and a second measurement signal of the second pressure sensor substantially at the same time while the pressure in the common measurement volume is in the overlap pressure measurement range;
bb) stipulating (102) the first measurement signal which has been read out as the adjustment point for the second pressure sensor;
cc) determining (103) at least one gas-dependent calibration parameter (Kl, K2) for the second pressure sensor as a function of the first measurement signal, as a function of the adjustment point as stipulated in step bb) and as a function of the second measurement signal,
**characterized in that** a current pressure measurement value in the measurement volume is determined as a function of a current second measurement signal and the previously determined at least one calibration parameter (K1) or the previously determined calibration parameters (K1, K2), and **in that** the method further comprises the step of:
gg) deciding (107) whether a gas composition present in the common measurement volume (2) deviates from a target specification, taking into account a deviation of the current pressure measurement value with respect to a pressure measurement value derived from the first measurement signal, wherein the reading out of the first measurement signal is performed substantially simultaneously with the reading out of the current second measurement signal and while the pressure in the common measurement volume is in the overlap pressure measurement range (6).

2. Method (100) according to claim 1, wherein the adjustment point for the second pressure sensor is in the pressure range 10⁻² mbar to 10⁰ mbar, in particular in the pressure range 0.1 to 0.4 mbar.

3. Method (120) according to claim 1 or 2, wherein the method further comprises the steps of:
dd) a further substantially simultaneous reading out (104) of a further first measurement signal of the first pressure sensor and a further second measurement signal of the second pressure sensor while the pressure in the common measurement volume is in the overlap pressure measurement range and wherein the pressure in the common measurement volume is different from the pressure in step aa), in particular wherein the pressure in the common measurement volume differs by a factor of two, by a decade or more from the pressure in step aa);
ee) stipulating (105) the further first measurement signal which has been read out as a further adjustment point for the second pressure sensor;
ff) determining (106) a further calibration parameter (K2), in particular a further gas-dependent calibration parameter, for the second pressure sensor as a function of the further first measurement signal, as a function of the further adjustment point stipulated in step ee) and as a function of the further second measurement signal.

4. Method (140) according to claim 3, wherein the further calibration parameter determined in step ff) is a slope in a double-logarithmic function diagram of the second measurement signal as a function of the first measurement signal, or wherein a slope in a double-logarithmic function diagram of the second measurement signal as a function of the first measurement signal is calculated from the calibration parameter determined in step cc) and the calibration parameter determined in step ff), and wherein the method further comprises the steps of:
hh) determining (108) a deviation of this slope from a slope expected for a reference gas, for example the gas nitrogen;
ii) comparing (109) the deviation determined in step hh) with a predetermined tolerance threshold for the deviation;
jj) triggering (110) an alarm for the presence of water vapor in the common measurement volume (2) if the tolerance threshold is exceeded.

5. Method (100, 120, 130, 140) according to one of claims 1 to 4, wherein the first pressure sensor (1') is a pressure sensor of a pressure sensor type independent of a gas composition in the measurement volume, and wherein the second pressure sensor (1'') is a pressure sensor of a pressure sensor type dependent on the gas composition in the measurement volume,
in particular wherein the second pressure sensor (1'') is
- a heat conduction vacuum meter, especially according to Pirani or with thermocouple sensor, or
- a cold cathode ionization vacuum meter, in particular a Penning ionization vacuum meter, or a non-inverted magnetron or an inverted magnetron, or
- an ionization vacuum meter with hot cathode, in particular an ionization vacuum meter according to Bayard-Alpert, an ionization vacuum meter with extractor or with triode, or
- a spinning rotor gauge sensor.

6. Method (100, 120, 130, 140) according to one of claims 1 to 5, wherein the first pressure sensor (1') is a diaphragm gauge, in particular a capacitance diaphragm gauge, in particular a ceramic capacitance diaphragm gauge, or an optical diaphragm gauge.

7. Method (100, 120, 130, 140) according to one of claims 1 to 6, wherein the second pressure sensor (1'') is a heat conduction vacuum meter, in particular according to Pirani or a thermocouple.

8. Method (100, 120, 130, 140) according to one of claims 1 to 7, wherein steps aa), bb) and cc) are repeated at regular time intervals, in particular once daily or once weekly.

9. Method (100, 120, 130, 140) according to one of claims 1 to 8 for operating a vacuum process system, comprising the group (1) of pressure sensors, wherein steps aa), bb) and cc) are repeated once per process cycle of the vacuum process system.

10. Method (150) according to one of claims 1 to 9, wherein the second pressure measurement range comprises a low-pressure range (5) in which the pressure is lower than a lower limit of the first pressure measurement range, wherein the method comprises the steps of:
kk) checking (111) whether the low-pressure range has been reached by means of a second measurement signal (3'') from the second pressure sensor;
ll) reading out (112) a first measurement signal (3') of the first pressure sensor while the pressure in the common measurement volume is in the low-pressure range; and
mm) stipulating (113) the first measurement signal which has been read out as a zero point signal for the first pressure sensor.

11. Method (150) according to claim 10, wherein the method further comprises the steps of:
nn) increasing (114) the pressure in the common measurement volume to the first pressure measurement range (4');
oo) reading out (115) a current first measurement signal (3') of the first pressure sensor;
pp) determining (116) a current pressure measurement value as a function of the current first measurement signal and
the zero point signal determined in step mm), in particular as a function of a difference of the current first measurement signal and the zero point signal.

12. Method (150) according to one of claims 10 or 11, wherein the low-pressure range (5) comprises only pressures that are lower than the lower limit of the first pressure measurement range by at least a factor of ten, in particular by at least a factor of one hundred.

13. Method (150) according to one of the claims 10 to 12, wherein the low-pressure range (5) comprises the range of 10⁻³ mbar up to 10⁻⁴ mbar.

14. Method according to one of claims 1 to 13, wherein the group of pressure sensors comprises at least three pressure sensors, and wherein the steps according to claim 1 are applied to a first pair of pressure sensors from the group of pressure sensors, and wherein the steps according to claim 1 are applied to a second pair of pressure sensors from the group of pressure sensors, wherein one of the pressure sensors of the first pair is also a pressure sensor of the second pair.

15. An apparatus (10) for carrying out a method according to one of claims 1 to 14, wherein the apparatus comprises:
- a group (1) of pressure sensors,
wherein the group comprises at least a first pressure sensor (1') having a first pressure measurement range (4') and a second pressure sensor (1'') having a second pressure measurement range (4''), wherein the first and second pressure sensors are arranged to measure pressure in a common measurement volume (2), and wherein the first (4') and second (4'') pressure measurement ranges overlap in an overlap pressure measurement range (6); and
- a control unit (12), which is operatively connected to a first signal output of the first pressure sensor and to a second signal output of the second pressure sensor, for processing measurement signals (3', 3'') of the pressure sensors, wherein the control unit (12) is adapted to carry out the method according to one of claims 1 to 14.

16. Apparatus (10) according to claim 15, wherein the first pressure sensor (1') is a diaphragm gauge, wherein the overlap pressure measurement range (6) in which the first (4') and second (4'') pressure measurement ranges overlap comprises the pressure 0.1 mbar, and wherein the group (1) of pressure sensors comprises a third pressure sensor having a third pressure measurement range, wherein the third pressure measurement range extends the first pressure measurement range to greater pressures.

17. Apparatus (10) according to one of claims 15 or 16, further comprising at least one means for changing the pressure in the common measurement volume, wherein the at least one means for changing the pressure is operatively connected to a pressure control unit (12) for initiating a lowering or an increasing of the pressure in the common measurement volume.

18. Computer program product comprising instructions which, when the instructions are executed by a control unit (12) of an apparatus (10) according to one of claims 15 to 17, cause the control unit to perform the steps of a method (100, 120, 130, 140, 150) according to one of claims 1 to 14.

## Revendications

1. Procédé (100) d'exploitation d'un groupe (1) de capteurs de pression,
dans lequel le groupe comprend au moins un premier capteur de pression (1') associé à une première étendue de mesure de pression (4') et un deuxième capteur de pression (1") associé à une deuxième étendue de mesure de pression (4"), dans lequel le premier et le deuxième capteurs de pression sont agencés de façon à pouvoir mesurer la pression dans un volume de mesure conjoint (2), la première (4') et la deuxième (4") étendues de mesure de pression se chevauchant sur une étendue de mesure de pression en chevauchement (6), et dans lequel le procédé comprend les étapes suivantes consistant à :
aa) lire de façon essentiellement simultanée (101) un premier signal de mesure du premier capteur de pression et un deuxième signal de mesure du deuxième capteur de pression pendant que la pression dans le volume de mesure conjoint se situe dans l'étendue de mesure de pression en chevauchement ;
bb) définir (102) le premier signal de mesure lu comme point de réglage du deuxième capteur de pression ;
cc) déterminer (103) au moins un paramètre d'étalonnage dépendant du gaz (K1, K2) pour le deuxième capteur de pression en fonction du premier signal de mesure, en fonction du point de réglage défini à l'étape bb) et en fonction du deuxième signal de mesure ;
**caractérisé en ce que** l'on détermine une valeur de mesure de pression réelle dans le volume de mesure en fonction d'un deuxième signal de mesure réel et du paramètre d'étalonnage (K1), au moins au nombre de un, précédemment déterminé, ou des paramètres d'étalonnage (K1, K2) précédemment déterminés, et
**en ce que** le procédé comprend en outre l'étape suivante consistant à :
gg) décider (107) si une composition de gaz présente dans le volume de mesure conjoint (2) s'écarte d'une valeur de consigne, un écart de la valeur de mesure de pression réelle par rapport à une valeur de mesure de pression dérivée du premier signal de mesure étant pris en compte, la lecture du premier signal de mesure s'effectuant essentiellement simultanément à la lecture du deuxième signal de mesure réel et pendant que la pression dans le volume de mesure conjoint se trouve dans l'étendue de mesure de pression en chevauchement (6).

2. Procédé (100) selon la revendication 1, dans lequel le point de réglage pour le deuxième capteur de pression se situe dans l'étendue de pression comprise entre 10⁻² mbar et 10⁰ mbar, en particulier dans l'étendue de pression comprise entre 0,1 et 0,4 mbar.

3. Procédé (120) selon la revendication 1 ou 2, dans lequel le procédé comprend en outre les étapes suivantes consistant à :
dd) lire une nouvelle fois et de façon essentiellement simultanée (104) un autre premier signal de mesure du premier capteur de pression et un autre deuxième signal de mesure du deuxième capteur de pression pendant que la pression dans le volume de mesure conjoint se situe dans l'étendue de mesure de pression en chevauchement, et que la pression dans le volume de mesure conjoint est différente de la pression de l'étape aa), en particulier pendant que la pression dans le volume de mesure conjoint diffère d'un facteur deux, d'un facteur dix ou plus par rapport à la pression de l'étape aa) ;
ee) définir (105) l'autre premier signal de mesure lu comme étant un autre point de réglage pour le deuxième capteur de pression ;
ff) déterminer (106) un autre paramètre d'étalonnage (K2), en particulier un autre paramètre d'étalonnage dépendant du gaz, pour le deuxième capteur de pression en fonction de l'autre premier signal de mesure, en fonction de l'autre point de réglage défini à l'étape ee) et en fonction de l'autre deuxième signal de mesure.

4. Procédé (140) selon la revendication 3, dans lequel l'autre paramètre d'étalonnage déterminé à l'étape ff) est un coefficient directeur d'un schéma fonctionnel avec échelle bilogarithmique du deuxième signal de mesure en fonction du premier signal de mesure, ou dans lequel on calcule, à partir du paramètre d'étalonnage déterminé à l'étape cc) et du paramètre d'étalonnage déterminé à l'étape ff), un coefficient directeur dans un schéma fonctionnel avec échelle bilogarithmique du deuxième signal de mesure en fonction du premier signal de mesure, et dans lequel le procédé comprend en outre les étapes suivantes consistant à :
hh) déterminer (108) un écart entre ce coefficient directeur et un coefficient directeur attendu pour un gaz de référence, par exemple l'azote gazeux ;
ii) comparer (109) l'écart déterminé à l'étape hh) avec un seuil de tolérance prédéfini pour l'écart ;
jj) en cas de dépassement du seuil de tolérance, déclencher (110) une alarme signalant la présence de vapeur d'eau dans le volume de mesure conjoint (2).

5. Procédé (100, 120, 130, 140) selon l'une des revendications 1 à 4, dans lequel le premier capteur de pression (1') est un capteur de pression d'un type indépendant d'une composition de gaz dans le volume de mesure
et dans lequel le deuxième capteur de pression (1") est un capteur de pression d'un type dépendant de la composition de gaz dans le volume de mesure,
en particulier dans lequel le deuxième capteur de pression (1")
- est un manomètre à vide à fil chaud, en particulier une jauge à vide Pirani ou un capteur à thermocouple, ou
- est un vacuomètre à ionisation avec cathode froide, en particulier une jauge de Penning, ou un magnétron non inversé ou un magnétron inversé, ou
- est un manomètre à ionisation avec cathode incandescente, en particulier un manomètre Bayard-Alpert, un manomètre à ionisation avec extracteur ou avec triode, ou
- est un capteur à manomètre à bille tournante (SRG).

6. Procédé (100, 120, 130, 140) selon l'une des revendications 1 à 5, dans lequel le premier capteur de pression (1') est un manomètre à membrane, en particulier un manomètre capacitif à membrane, en particulier un manomètre capacitif à membrane céramique, ou un manomètre optique à membrane.

7. Procédé (100, 120, 130, 140) selon l'une des revendications 1 à 6, dans lequel le deuxième capteur de pression (1") est un manomètre à vide à fil chaud, en particulier une jauge à vide Pirani, ou un capteur à thermocouple.

8. Procédé (100, 120, 130, 140) selon l'une des revendications 1 à 7, dans lequel les étapes aa), bb) et cc) sont répétées à intervalles réguliers, en particulier une fois par jour ou une fois par semaine.

9. Procédé (100, 120, 130, 140) selon l'une des revendications 1 à 8 pour exploiter une installation de traitement sous vide qui comprend le groupe (1) de capteurs de pression, les étapes aa), bb) et cc) étant répétées une fois par cycle de traitement de l'installation de traitement sous vide.

10. Procédé (150) selon l'une des revendications 1 à 9, dans lequel la deuxième étendue de mesure de pression comprend une étendue de basse pression (5) dans laquelle la pression est inférieure à une limite inférieure de la première étendue de mesure de pression,
dans lequel le procédé comprend les étapes suivantes consistant à :
kk) vérifier (111) si l'étendue de basse pression est atteinte en utilisant un deuxième signal de mesure (3") du deuxième capteur de pression ;
ll) lire (112) un premier signal de mesure (3') du premier capteur de pression tandis que la pression dans le volume de mesure conjoint se situe dans l'étendue de basse pression ; et
mm) définir (113) le premier signal de mesure lu comme signal de point zéro du premier capteur de pression.

11. Procédé (150) selon la revendication 10, dans lequel le procédé comprend en outre les étapes suivantes consistant à :
nn) augmenter (114) la pression dans le volume de mesure conjoint dans la première étendue de mesure de pression (4') ;
oo) lire (115) un premier signal de mesure réel (3') du premier capteur de pression ;
pp) déterminer (116) une valeur de mesure de pression réelle en fonction du premier signal de mesure réel et du signal de point zéro déterminé à l'étape mm), en particulier en fonction d'une différence entre le premier signal de mesure réel et le signal de point zéro.

12. Procédé (150) selon l'une des revendications 10 ou 11, dans lequel l'étendue de basse pression (5) comprend uniquement des pressions qui sont inférieures d'au moins un facteur dix, en particulier d'au moins un facteur cent, à la limite inférieure de la première étendue de mesure de pression.

13. Procédé (150) selon l'une des revendications 10 à 12, dans lequel l'étendue de basse pression (5) comprend l'étendue de 10⁻³ mbar à 10⁻⁴ mbar.

14. Procédé selon l'une des revendications 1 à 13, dans lequel le groupe de capteurs de pression comprend au moins trois capteurs de pression, et dans lequel les étapes selon la revendication 1 sont appliquées à une première paire de capteurs de pression du groupe de capteurs de pression, et dans lequel les étapes selon la revendication 1 sont appliquées à une deuxième paire de capteurs de pression du groupe de capteurs de pression, l'un des capteurs de pression de la première paire étant également un capteur de pression de la deuxième paire.

15. Dispositif (10) de mise en œuvre d'un procédé selon l'une des revendications 1 à 14, le dispositif comprenant :
- un groupe (1) de capteurs de pression,
le groupe comprenant au moins un premier capteur de pression (1') associé à une première étendue de mesure de pression (4') et un deuxième capteur de pression (1") associé à une deuxième étendue de mesure de pression (4"), le premier et le deuxième capteurs de pression étant disposés de façon à pouvoir mesurer la pression dans un volume de mesure conjoint (2), et la première (4') et la deuxième (4") étendues de mesure de pression se chevauchant sur une étendue de mesure de pression en chevauchement (6) ; et
- une unité de commande (12), qui est reliée en fonctionnement à une première sortie de signal du premier capteur de pression et à une deuxième sortie de signal du deuxième capteur de pression afin de traiter les signaux de mesure (3', 3") des capteurs de pression, l'unité de commande étant conçue pour exécuter le procédé selon l'une des revendications 1 à 14.

16. Dispositif (10) selon la revendication 15, dans lequel le premier capteur de pression (1') est un manomètre à membrane, dans lequel l'étendue de mesure de pression en chevauchement (6), dans laquelle la première (4') et la deuxième (4") étendues de mesure de pression se chevauchent, comprend la pression de 0,1 mbar, et dans lequel le groupe (1) de capteurs de pression comprend un troisième capteur de pression associé à une troisième étendue de mesure de pression, la troisième étendue de mesure de pression étendant la première étendue de mesure de pression vers des pressions plus élevées.

17. Dispositif (10) selon l'une des revendications 15 ou 16, comprenant en outre au moins un moyen pour modifier la pression dans le volume de mesure conjoint, ledit moyen pour modifier la pression, au moins au nombre de un, étant relié en fonctionnement à une unité de régulation de pression (12) afin de déclencher une diminution ou une augmentation de la pression dans le volume de mesure conjoint.

18. Produit informatique logiciel comprenant des instructions qui, lors de l'exécution des instructions par une unité de commande (12) d'un dispositif (10) selon l'une des revendications 15 à 17, provoquent le fait que l'unité de commande réalise les étapes d'un procédé (100, 120, 130, 140, 150) selon l'une des revendications 1 à 14.
